# EUROPEAN PATENT SPECIFICATION

(11) **EP 2 781 338 B1**
(45) Date of publication and mention of the grant of the patent: **15.02.2017**
(21) Application number: 13180143.3
(22) Date of filing: 12.08.2013
(51) Int. Cl.: B29C 63/02, B29C 47/00, B29C 59/04

(54) **METHOD OF APPLYING OUTER COATING ON PVC PROFILES AND DEVICE FOR APPLYING OUTER COATING ON PVC PROFILES**
VERFAHREN UND VORRICHTUNG ZUR AUSSENBESCHICHTUNG VON PROFILEN AUS PVC
MÉTHODE ET DISPOSITIF POUR REVÊTIR EXTÉRIEUREMENT DES PROFILÉS EN PVC

(30) Priority: 22.03.2013 PL 40326213
(43) Date of publication of application: 24.09.2014
(73) Proprietor: OKNOPLAST Spolka z ograniczona odpowiedzialnoscia, 32-003 Ochmanow (PL)
(72) Inventor: Saferna, Dariusz, 31-552 Krakow (PL)
(74) Representative: Hudy, Ludwik

(56) References cited:
- DE-A1- 3 920 854
- DE-A1-102006 031 070
- US-B1- 6 210 512

## Description

The present invention relates to a method of applying an outer coating on PVC profiles, in particular profiles used for window frames, door frames, shutters and elevation structures, according to the preamble of claim 1. According to the method, in the extrusion process carried out in an extruder after the main mouthpiece, and before calibrators, at least one PVC film or foil of a certain color and rolled out from at least one roll is added, and which by pressing by at least one rotatable cylinder is pasted to the profile moving from the mouthpiece along the longitudinal axis of the profile.

The invention also relates to a device for applying an outer coating on profiles, in particular a soft plastic film, according to the preamble of claim 7. The device for applying the outer coating on the PVC profiles may comprise an extruder with a material feeder and with the main mouthpiece after which calibrators are located, a feeder of at least one PVC film or foil forming the outer coating of a PVC profile and rolled out from at least one roll and intended for feeding the PVC film or foil after the main mouthpiece and located before the calibrators, and at least one pressing device having at least one main shaft with rotatable cylinder pressing the PVC film or foil to the profile moving from the mouthpiece along the longitudinal axis of the profile.

Increasingly typical window and door frames are made of plastic profiles, for example PVC, instead of wood profiles which after cutting at the specified angle are combined with each other. Several years ago the majority of window and door frames were made of white profiles. As the technology of making profiles developed, white began to be replaced by other colors, following the expectations of end users. Currently the buyer has an entire range of color profiles to choose from. Additionally the surface of profiles can vary in texture, taking into account the buyer's preferences, for example, for the texture of wood.

A differentiated surface of profiles in terms of color is often obtained in the process of shaping profiles, during which the cylinders and head of the extruder with a specified capacity force the PVC material through a heated nozzle mouthpiece, whose shape is dependent on the profile shape, and which gives it a preliminary shape. Usually, the still soft material then passes through a cooling and calibrating device, where it is sucked onto the calibrator or calibrators giving the final shape and dimensions of the profile. Speed of the device pulling away the profile located after the extruder, and the cooling device, is synchronized with the extruder's capacity, which enables control of the profile wall thickness, and the saw, usually a circular saw, allows to trim the profile into sections of specific lengths. In the manufacture process a paint, plastic mass or a foil can be applied on the profile, which gives the surface of the profile a specific color.

From the publication EP 1782937 A2 entitled *"Verfahren zur Umhullung eines Hohlprofils mit Metalfolie"* a device for applying aluminum foil on a plastic profile directly after the finished process of profile extrusion, or after the next stage of manufacture is known. The aluminum foil can be pre-prepared, that is provided as a material coated with an adhesive or the adhesive is applied onto the foil prior to contact with the profile. The adhesives applied may be in various forms, for example spray, varnish, self-adhesive foil, and/or underlay. Prior to application onto the plastic profile, the metal foil is heated to such an extent as to activate the adhesive. When applied onto the profile, the foil is pressed against the profile by means of a roller. The foil covers the profiles that are cut to length and/or that undergo further finishing processes. The metal foil, preferably aluminum foil, is applied onto at least the outer surface.

Furthermore, from the publication WO 03026858 A2 entitled *"A device for producing a profile having a wood pattern"* a device for producing a profile with a wood pattern is known, which has a mouthpiece feeding a second type of plastic with powdered wood. During the extrusion process, where the plastic material is extruded into a product shaped as a specific letter through an outlet of an extruder, and an artificial passage is formed. Also a second inlet from one side of the extruded product is formed, to ensure feeding the second plastic with powdered wood. The second inlet is connected to the second passage that is connected to the passage of plastic material from which the product is extruded and therefore the product surface is coated with the second plastic material. Nozzle ducts are formed within a section of the second inlet, so that the product surface is covered with the second type of plastic material in an increased amount to create a perfect wood pattern.

From the publication CH 669229 A5 entitled *"Verfahren zum Bedrucken von Hart-PVC-Schaumstoffen"* an unplasticized PVC foam is known, which is printed in a dry process. In this process, a temporary substrate containing ink which sublimes in the temperature range 80 - 180°C, is brought into contact with the foam due to heat and pressure. The ink contained in the substrate penetrates onto a cover of the foam immediately after producing the foam, preferably using the heat generated in the foam production.

On the other hand, from the publication CA 2119966 A1 entitled *"Method and apparatus for surface treatment of extruded PVC"* a method and apparatus for producing painted, extruded polyvinyl chloride with a complex surface structure is known. The method comprises stages in which PVC is extruded, and then the extruded PVC is sprayed with paint, followed by drying and cutting the coated PVC to a fixed length. The apparatus includes a device for extruding PVC, a paint source connected to atomizer for spray painting on the surface of the extruded PVC, a dryer for drying the painted, embossed surface of the PVC, and a device for cutting the dried, painted PVC.

Publication DE 3920854 A1 entitled *"Verfahren zur Herstellung von oberflachenveredelten Kunststoffprofilen"* presents a process of producing plastic profile surfaces, for example window or door frames, finished with decorative foil in the color of wood. The extruded material is pasted at a temperature above a softening point. A device for applying external foil to the PVC profiles presented in this publication and comprises an extruder, with a material container and extruding cylinder, which is equipped with the main mouthpiece after which calibrators are placed. Between the main mouthpiece and the calibrator a feeder of at least one foil is located. Each foil is directed by a roll to a pressing device equipped with one roller pressing the foil onto the moving profile.

From the publication GB1406899 A. entitled *"Manufacturing process for making an elongate member including an extruded plastics element and a metallized foil laminated thereon"* a device and a process for making an elongate plastic member is known, on which a metalized foil is laminated.

Furthermore, from the publication GB1272601 A titled *"Manufacture of collapsible tubes"* a device for manufacture of collapsible tubes from plastic material by means of an extruder and continuously winding a metal foil around the collapsible tube is known. During the manufacture the metal foil is heated and pressed into the plastic tube in order that the metal foil adheres to the plastic tube.

A profile produced by means of the described devices, if not already of a single color, has a texture in colors of wood, which is repeated in cycles.

The object of the present invention is to provide a possibility of producing a differentiated texture on the profile surface, such as wood texture showing not only colors, but also palpable pits and ridges.

In relating to a method this problem is solved by a method of applying outer coating on PVC profiles with features according to claim 1 and according to a device is solved by features according to claim 7.

A main idea of the invention is a method of applying outer coating on PVC profiles, where in the extrusion process carried out in an extruder, after a main mouthpiece and before calibrators, at least one PVC foil of a certain color and rolled out from at least one roll is added, and which by pressing by at least one rotatable cylinder is pasted to the profile moving from the mouthpiece along the longitudinal axis of the profile. This foil is pressed by a set of rotatable cylinders, comprising at least a rotatable main cylinder placed on the main shaft and an auxiliary rotatable cylinder placed on an auxiliary shaft, placed one after the other after the main mouthpiece and before the calibrators, whereby outer cylindrical surfaces have a different texture showing as pits and ridges, and which in the sections of outer cylindrical surfaces in contact with the foil of a certain color are moved relative to each other transversely to the profile axis after at least a full rotation of the main rotatable cylinder and/or the auxiliary rotatable cylinder. By correlating longitudinal motion of the PVC profile with displacement of the outer cylindrical surfaces which have different texture, a non-repetitive sequence of pits and ridges on the profile surface is formed when the profile moves along its longitudinal axis by pressing the foil to the profile by means of a set of cylinders containing at least the main cylinder and the auxiliary cylinder.

A particularly differentiated outer texture is formed when the outer cylindrical surface sections or portions or fragments in contact with the foil are moved relative to each other transversely to the profile axis by moving the main cylinder or the auxiliary cylinder along their axis of rotation or by moving the main rotatable cylinder or the auxiliary rotatable cylinder along their axes of rotation in opposite directions.

Basically the main cylinder and/or the auxiliary cylinder can be moved along their axes of rotation by various methods. However, it turned out that the texture can be varied when the main cylinder and/or the auxiliary cylinder is moved by means of worm gears, which on a drive shaft have worms coupled with a driving shaft by clutches whereas worm-wheels of the worm gears are located on the shaft of the main cylinder and on the shaft of the auxiliary cylinder.

When the extruder is controlled by a processor and is equipped with a pneumatic or hydraulic system, the main shaft of the main cylinder and/or the auxiliary shaft of the auxiliary cylinder can be moved along their rotation axes by linear motors or hydraulic actuators or pneumatic actuators individually or separately to the main shaft and the auxiliary shaft embedded slidably in slide bearings.

In addition, the sections or portions or fragments of the outer cylindrical surfaces in contact with the foil can be moved relative to each other by varying the diameter of the main cylinder and the auxiliary cylinder.

According to the invention, a device for applying an outer coating on PVC profiles comprises an extruder with a material feeder and equipped with the main mouthpiece after which calibrators are located, a feeder of at least one PVC foil forming the outer coating of the PVC profile and rolled out from at least one roll and intended for feeding the PVC foil behind the main mouthpiece and before the calibrators, and at least one pressing device having at least one main shaft with a rotatable cylinder pressing the PVC foil to the profile moving from the mouthpiece along the longitudinal axis of the profile. For a varied texture on an outer surface of the profile, the rotatable main cylinder pressing the PVC foil is arranged with at least one rotatable auxiliary cylinder, wherein the auxiliary cylinder mounted on an auxiliary shaft and the main cylinder mounted on a main shaft are arranged one behind the other in the direction of the longitudinal axis of the profile behind the main mouthpiece and before the calibrators and form a set pressing the PVC foil to the profile, and their outer cylindrical surfaces located on the rotatable cylinders have a different texture from each other showing pits and ridges and are movable with respect to each other transversely to the longitudinal axis of the profile, and after at least a full rotation of the main rotatable cylinder and/or the auxiliary rotatable cylinder form a non-repetitive sequence of pits and ridges on a profile surface during movement of the profile along its longitudinal axis due to pressing the foil to the profile by means of a set of cylinders containing at least the main cylinder and the auxiliary cylinder. A greater variety of textures can be achieved when during the manufacture of the PVC profiles the auxiliary cylinder and the main cylinder will be replaced by the other auxiliary cylinders and main cylinders.

In one embodiment, on the shaft of the main cylinder and on the shaft of the auxiliary cylinder having cylindrical surfaces of different textures there are worm-wheels mounted of worm gears whereby each of the worm gears has a separate worm mounted on the drive shaft which is independently engageable with the drive shaft by means of couplings.

The shaft of the main cylinder and the shaft of the auxiliary cylinder having cylindrical surfaces of different textures can be coupled independently with at least one linear motor or hydraulic actuator or pneumatic actuator causing movement of the rotatable cylinders along their rotation axis wherein displacement of the cylinders relative to each other must be large enough to vary the texture of the outer surface of the PVC profile.

The invention has been illustrated in the accompanying drawings, in which:
Fig. 1 shows schematically a device for embodiment of a method of applying outer coating on PVC profiles;
Fig. 2 shows schematically a device for applying a foil, for example a PMMA foil on an outer surface of the PVC profile;
Fig. 3 shows schematically a device for pressing the foil with a set of shafts for pressing the foil onto the PVC profile according to one embodiment of the invention;
Fig. 4 shows schematically another device for pressing the foil with a set of shafts for pressing the foil onto the PVC profile according to another embodiment of the invention;
Fig. 5 shows schematically one of the surfaces of the profile with applied foil with non-repetitive texture of the profile surface; and
Fig. 6 shows an axonometric view of the profile with applied foil on which the texture of wood is produced.

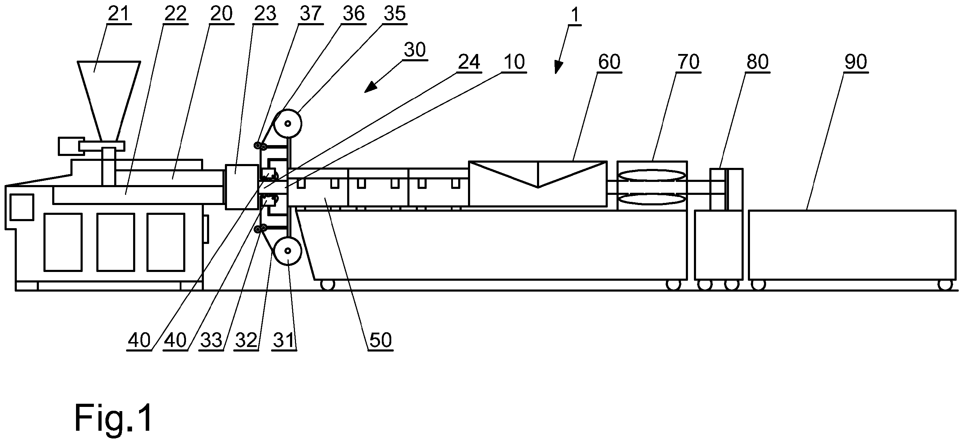

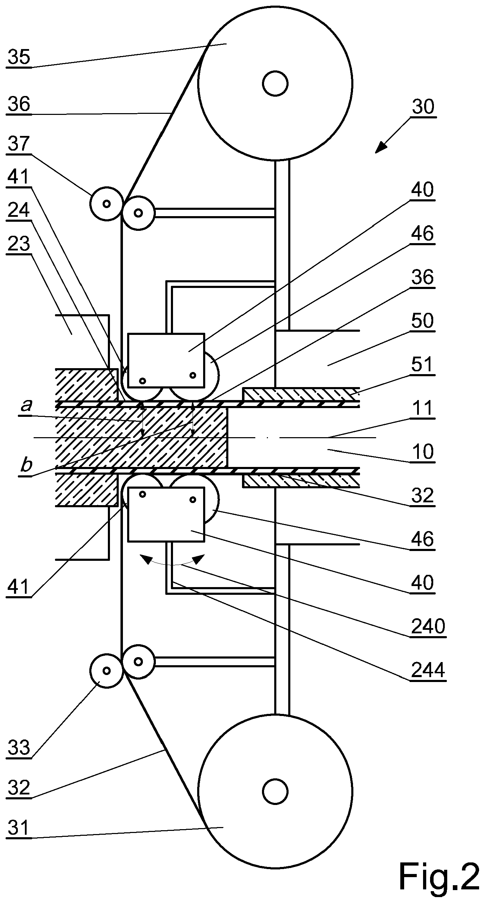

A device 1 for applying an outer coating, in particular a foil of soft plastic material, on PVC profiles 10 for the embodiment of a method of applying outer coating on the PVC profiles 10 according to the invention, shown in Fig. 1, comprises an extruding machine 20, also known as an extruder, with a material container 21 and extruding cylinder 22, which is equipped with a main mouthpiece 24 located in a head 23 of the extruder 20, after which there are calibrators 50. Between the main mouthpiece 24 and the calibrator or calibrators there is a feeder 30, shown in detail in Fig. 2, of at least one PVC foil 32, 36 forming the outer coating of the PVC profile 10 and rolled out from at least one roll 31, 35. Furthermore, the device 1 also has a cooling unit 60, most frequently integrated with the calibrator 50 or a set of calibrators, a profile winding machine 70 or a device withdrawing the profile 10, a saw 80 cutting the profile 10 into sections, and a storage 90 for finished profiles.

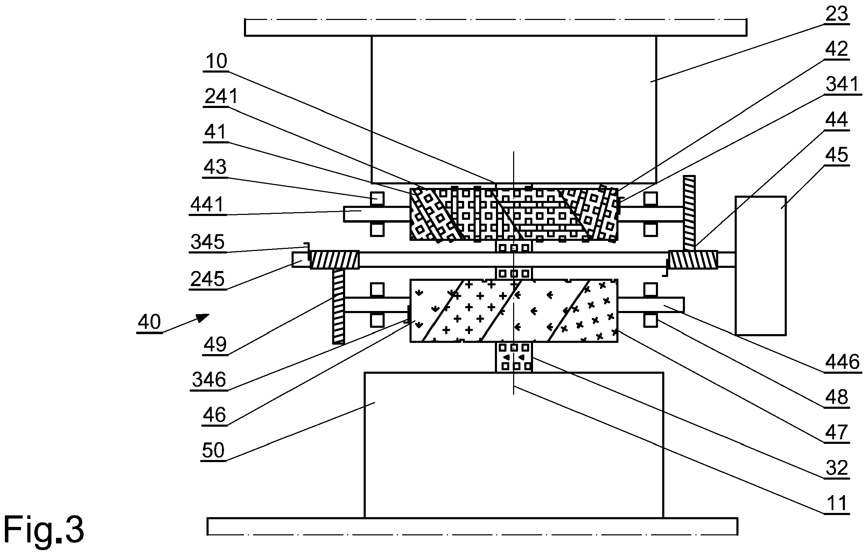

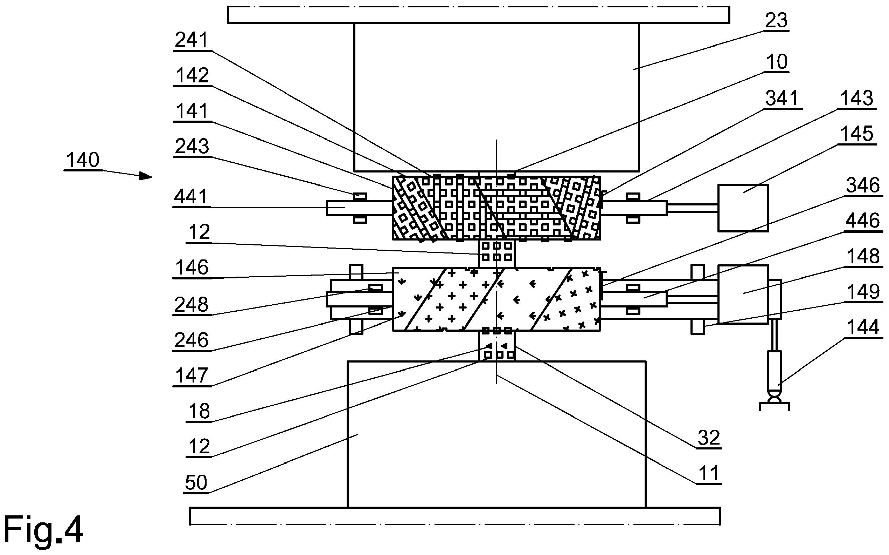

In the embodiment shown in Fig. 1 and in detail in Figs. 2, 3 and 4 the feeder 30 for feeding two PVC foils 32, 36, located after the main mouthpiece 24 of the head 23 and before the calibrators 50 with devices 51 for giving the final shape to the profile 10, has two storage rolls 31, 35, from which two films 32, 36 are rolled out, for example PMMA foils, which are carried out by two sets of moving rolls 33, 37, which are directed to pressing devices 40 having at least one main shaft 441, shown in Figure 3, with the main rotatable cylinder 41 pressing the foil 32 to the profile moving from the mouthpiece 24 along the longitudinal axis 11 of the profile 10, which is arranged with at least one auxiliary shaft 446, shown in Fig. 3, with an auxiliary rotatable cylinder 46. The auxiliary cylinder 46 and the main cylinder 41 are rotatable due to the fact that they are either rotatably mounted on their shafts 441, 446, but immovably along their axes, and then freely coated by the foil surface, or are engageable by means of clutches 341, 346 with the shafts 441, 446, or are permanently connected with these shafts, and their rotation is synchronized with the movement of the profile along its axis. The auxiliary rotatable cylinder 46 and the main rotatable cylinder 41 of pressing devices 40 are placed one after the other and form a set pressing the foils 32, 36, or one of them, to the profile 10, and their cylindrical outer surfaces 241, 246, shown in Figure 3 and 4, have the texture different from each other.

The outer cylindrical surfaces 241, 246 of the main cylinder 41, 141, and the auxiliary cylinder 46, 146, in their sections in contact with the foil are movable relative to each other. To achieve the effect of varied texture of the profile surface from applying different patterns of the main cylinder 41, 141 and the auxiliary cylinder 46, 146 not only transversely, but also lengthwise of the profile, the outer cylindrical surfaces 241, 246 of the main cylinder 41, 141 and the auxiliary cylinder 46, 146 in their sections in contact with the foil, which are in the embodiment according to the invention in the aforementioned sections which have the shape of narrow strips of a width of even less than 1 mm, are movable towards each other, at least after a full rotation of the main cylinder 41 and/or auxiliary cylinder 46. In order to better understand the solution, it should be taken into account that the texture in the present invention is understood as recognizable optical or mechanically palpable irregularities of the surface, not resulting from its shape. A texture is a concept referring to irregularities of relatively small spaces between the pits or ridges in relation to the dimensions resulting from the shape of the object. In one of the embodiments of the invention, the pressure on the foil of the main cylinder 41 and/or the auxiliary cylinder 46 by means of the device 240 controlling the pressure of the cylinders on the foil, schematically indicated by arrows, is changed causing deflection of the spring arm 244 from a vertical position. This pressure can be changed by changing the distance a and/or b. By changing the pressure of the cylinders, the patterns placed on the outer cylindrical surfaces are differently imprinted on the foil surface, which results in varied final texture.

Fig. 3 shows schematically a top view of one device 40 for pressing the foil with a set of cylinders 41, 46 pressing the foil 32 to the PVC profile 10 according to one of the embodiments of the invention. In this example, the outer cylindrical surface 241 located on the main cylinder 41 which can rotate around its own axis and move along its axis, has four fragments placed one after the other along the width of the cylindrical surface on which there are protruding above the surface rectangles 42 varying in dimensions and setting to the longitudinal axis of the shaft 11. The rectangles are only an example of ridges and pits or furrows used to explain the creation of texture on the foil, and in the actual embodiment they are a set of protruding narrow ridges and pits or furrows of different lengths and a triangle cross section with the tip of the triangle directed into the cylindrical surface in the case of tips or furrows, and the triangle directed outwards in the case of ridges. The main shaft 441 of the main rotatable cylinder 41 is mounted in bearings 43 and is movable along its axis by a gear 44 driven by the driving system 45 with a driving shaft 245. In one of the embodiments the gear is a worm gear, which on the drive shaft 245 has a worm coupled with the driving shaft 245 by means of couplings 345, for example claw couplings, and in which a worm-wheel is located on the shaft of the main rotatable cylinder 41 and the shaft of the auxiliary rotatable cylinder 46. Displacement of the main cylinder 41 along its own axis, for example to the left, and hence, displacement of the pressed to the foil 32 section of the outer cylindrical surface 241 with the rectangles placed perpendicularly to the rotation axis of the cylinder to the left due to the change on the surface with the rectangles placed parallel to the rotation axis of the cylinder will cause the section of the outer cylindrical surface 241 to be pressed to the foil with the rectangles placed parallel to the rotation axis of the cylinder, and thus the texture of the foil surface will change along with the movement of the section of the outer cylindrical surface 241 relative to the foil 32. A similar situation occurs with the displacement of the auxiliary rotatable cylinder 46 along its axis, whose outer surface has four sections 47 placed one after the other along the width of the cylindrical surface 246, on which there are different patterns placed in the form of crosses, which are the pits, and arrows. The auxiliary shaft 446 of the auxiliary cylinder 46 with a diameter larger than the diameter of the main cylinder 41, similarly as the main shaft is mounted in bearings 48 and is movable along its axis by a gear 49 driven by the driving system 45. Displacement of the auxiliary cylinder 46 along its own axis, for example to the right, and hence, displacement of the pressed to the foil 32 section of the outer cylindrical surface 246 with arrows to the right will cause the section of the outer cylindrical surface 246 with the arrows to be pressed to the foil, and thus the texture of the foil surface will change along with the displacement of the section of the outer cylindrical surface 246 relative to the film 32. Fig. 3 shows that the worm 44 that causes longitudinal displacement of the main shaft is a right-handed worm gear, and the worm 49 that causes longitudinal displacement of the auxiliary shaft is a left-handed worm gear, which means that there is transverse movement to the longitudinal axis 11 of the profile 10 relative displacement of the sections of the surface leading to a change of the sequence of pits and ridges on the profile surface during the displacement of the profile 10 along its longitudinal axis 11 by pressing the foil to the profile by means of the set of cylinders containing at least the main rotatable cylinder 41 and the auxiliary rotatable cylinder 46. From Fig. 3 it can be concluded that to change the texture of the surface it is sufficient to have at least one rotatable cylinder displaceable in a direction transverse to the longitudinal axis of the profile relative to the foil pressed to the profile.

Fig. 4 shows schematically a top view of a device 140 for pressing the foil using a set of cylinders 141, 146 pressing the foil 32 to the PVC profile 10 according to another embodiment of the invention. In this embodiment, the main rotatable cylinder 141 mounted on a shaft 441 has the same outer diameter as the outer diameter of an auxiliary rotatable cylinder 146 mounted on a shaft 446, and their position relative to the film 32 and the profile 10 is similar to the position of the cylinders in the embodiment shown in Fig. 3. The main shaft 441 of the main rotatable cylinder 141 is mounted in bearings 243, as well as the auxiliary shaft 446 of the auxiliary rotatable cylinder 146 is mounted in bearings 248. The significant difference consists in replacement of the drive of displacement of the rotatable cylinder shafts with toothed gears with a system of shaft displacement where actuators, that is the elements moving the shafts 441, 446, are linear motors or actuators, such as hydraulic or pneumatic actuators. The main rotatable cylinder 141 with its outer cylindrical surface 241 with rectangles 142 placed diagonally to the rotation axis of the cylinder and the auxiliary rotatable cylinder 146 with its outer cylindrical surface 246 with arrows 147 may be displaced transversely to the longitudinal axis 11 of the profile 10 independently of each other by separate linear motors 143 or actuators with driving systems 145, 148. Additionally, one of the shafts, for example the auxiliary shaft of the auxiliary rotatable cylinder 146 can be displaced parallel to the longitudinal axis 11 of the profile 10 by a linear motor 144 on a guide track 149. The foil 32 located on the profile 10 moving from the head 23 towards the calibrator 50, on the section between the cylinders, has only the pattern in the form of rectangles 12 imprinted by pressing the outer surface 241 of the main rotatable cylinder 141, on the section between the auxiliary rotatable cylinder 146 and the calibrator 50 has a combination of patterns in the form of the rectangles 12 imprinted by pressing the outer surface 241 of the main cylinder 141 and in the form of arrows 18 imprinted by pressing the outer surface 246 of the auxiliary cylinder 146. After the displacement of either of the outer cylindrical surface 241, 246 transversely to the longitudinal axis 11 of the profile 10, the resulting sequence of pits and ridges imprinted on the foil will change along the length of the foil, as opposed to the case, if the transverse position of the cylinders was constant, wherein the sequence of pits and ridges imprinted on the foil would repeat itself after a full rotation of the cylinders with their outer cylindrical surfaces. The displacement of the cylindrical surfaces with respect to each other is controlled by the control system which is not shown.

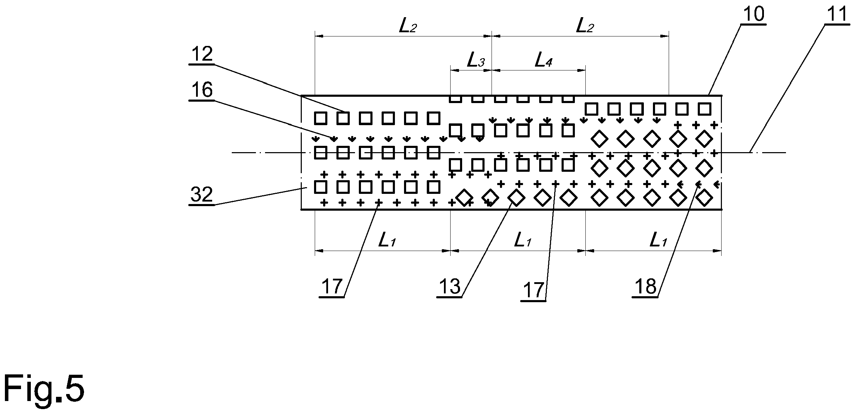

Fig. 5 shows the sequence of patterns imprinted on the foil 32 placed on the profile 10 by the main cylinder 41 and the auxiliary cylinder 46 which, in addition to the various characters, has a larger outer diameter than an outer diameter of the main cylinder. For example, at a length *L₁* equal to the perimeter of the main cylinder 41 there is a longitudinal sequence of patterns 12 located on its outer cylindrical surface impressed and the longitudinal sequence of patterns 16, 17 located on the outer cylindrical surface of the auxiliary cylinder 46, prior to displacement of any of the cylinders transverse relative to the longitudinal axis 11 of the profile 10. After displacing the main cylinder 41 transversely, on the foil 32 pattern 12 has moved upwards and at the bottom there were also a diamond-shaped patterns 13 on the section equal to the sum of lengths *L₃* and *L₄*, and thus on the section *L₃* a combination of sequence of patterns 12 and 16, 13 and 17 was created after the transverse displacement of the main cylinder 41 and prior to transverse displacement of the auxiliary cylinder 46. After concurrently displacing the auxiliary cylinder 46 transversely, on the section *L₄* a new combination of the sequence of the patterns was created after the transverse displacement of the main cylinder 41 and after the transverse displacement of the auxiliary cylinder 46, which has a perimeter equal to section *L₂*. The presented sequence of patterns corresponds to the case where the main rotatable cylinder and the auxiliary rotatable cylinder are displaced transversely after a full rotation. To obtain bigger changes in the sequence of patterns, it is only necessary to displace the cylinders transversely to the longitudinal axis of the profile after rotating any of them by angle of less than 360°.

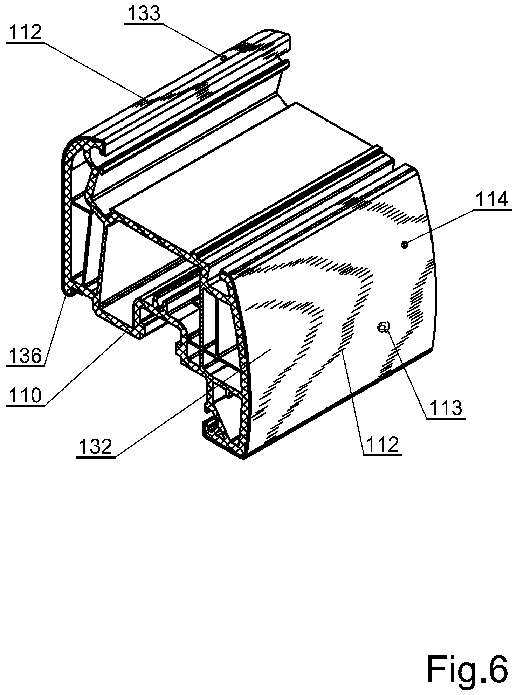

Fig. 6 shows an axonometric view of a profile 110 with applied foils 132 and 136, on which a texture of wood is formed. The texture of wood, apart from the colors imitating wood grains, is formed of wood grains 112 and wood knots 113, 114, 133 in the form of pits and ridges, which can be achieved by programming the appropriate displacement of the cylinders along their axes of rotation. Due to the pits and ridges, the adhesion of foil to the profile increases in the process of producing the profile because the surface of contact of the foil is increased and the excess foil pasted to the PVC profile is locally removed.

## Claims

1. A method of applying an outer coating on PVC profiles where in an extrusion process conducted in an extruder, after a main mouthpiece and before calibrators, at least one PVC foil of a certain color is added which is unwound from at least one roll and which by pressing by at least one rotatable cylinder is pasted to a profile moving from the mouthpiece along a longitudinal axis of the profile, **characterized in that** at least one foil (32, 36) is pressed by a set of rotatable cylinders (41, 46) comprising at least a main rotatable cylinder (41) mounted on a main shaft (441) and an auxiliary rotatable cylinder (46) mounted on an auxiliary shaft (446), placed one after the other behind the main mouthpiece (23) and before the calibrators (50), and of which outer cylindrical surfaces (241, 246) have a different texture showing pits and ridges, and which in parts of outer cylindrical surfaces (241, 246) being in contact with the foil (32) with the certain color are displaced relative to each other transversely to the longitudinal axis (11) of the profile (10), and after at least a full rotation of the main rotatable cylinder (41) and/or the auxiliary rotatable cylinder (46) form a non-repetitive sequence of pits and ridges on a profile (10) surface during movement of the profile (10) along its longitudinal axis (11) due to pressing the foil (32) to the profile by means of a set of cylinders containing at least the main cylinder (41) and the auxiliary cylinder (46).

2. The method according to claim 1, **characterized in that** the sections/parts of outer cylindrical surfaces (241, 246) being in contact with the foil (32) are moved relative to each other transversely to the profile axis by displacing the main cylinder (41) or the auxiliary cylinder (46) along their rotation axes.

3. The method according to claim 1, **characterized in that** the sections/parts of outer cylindrical surfaces (241, 246) being in contact with the foil (32) are moved relative to each other transversely to the longitudinal axis (11) of the profile (10) where the main cylinder (41) and the auxiliary cylinder are moved in opposite directions (46) along their rotation axes.

4. The method according to one of the preceding claims, **characterized in that** the main cylinder (41) and/or auxiliary cylinder (46) moves along its rotation axis by means of worm gears (44, 49) which on a drive shaft (245) have worms coupled with the driving shaft (245) by means of coupling (345) and have worm-wheels on the main shaft (441) of the main cylinder (41) and on the auxiliary shaft (446) of the auxiliary cylinder (46) engageable with the worms.

5. The method according to one of claims 1 to 3 **characterized in that** the main shaft (441) of the main cylinder (141) and/or the auxiliary shaft (446) of the auxiliary cylinder (46) is moved along their rotation axis by means of linear motors (143) or hydraulic or pneumatic actuators coupled independently with the main shaft (441) and the auxiliary shaft (446) mounted slidably in slide bearings.

6. The method according to one of the preceding claims, **characterized in that** the sections of outer cylindrical surfaces (241, 246) in contact with the foil are moved relative to each other by varying the diameter of the main cylinder (41) and the auxiliary cylinder (46).

7. A device for applying an outer coating on PVC profiles containing an extruder with material feeder and equipped with a main mouthpiece after which calibrators are located, the feeder of at least one PVC foil forming the outer coating of the PVC profile and rolled out from at least one roll, and intended for feeding the PVC foil behind the main mouthpiece and before the calibrators, and at least one pressing device having at least one main shaft with rotatable cylinder pressing the PVC foil to the profile moving from the mouthpiece along the longitudinal axis of the profile, **characterized in that** the main rotatable cylinder (41) pressing the PVC foil (32, 36) is in set with at least one auxiliary rotatable cylinder (46), wherein the auxiliary cylinder (46) mounted on an auxiliary shaft (446) and the main cylinder (41) mounted on a main shaft (441) are placed one after the other behind the main mouthpiece (23) and before the calibrators (50) in the direction of the longitudinal axis (11) of the profile (10) and form a set pressing the PVC foil (32) to the profile (10) and their outer cylindrical surfaces (241, 246) placed on the rotatable cylinders (41, 46) have a different texture from each other showing pits and ridges and are movable relative to each other transversely to the longitudinal axis (11) of the profile (10), and after at least a full rotation of the main rotatable cylinder (41) and/or the auxiliary rotatable cylinder (46) form a non-repetitive sequence of pits and ridges on a profile (10) surface during movement of the profile (10) along its longitudinal axis (11) due to pressing the foil (32) to the profile by means of a set of cylinders containing at least the main cylinder (41) and the auxiliary cylinder (46).

8. The device according to claim 7, **characterized in that** on a main shaft (441) of the main cylinder (41) and on an auxiliary shaft (446) of the auxiliary cylinder (46) having the cylindrical surfaces (241, 246) of different textures there are worm-wheels mounted, each meshes with a separate worm mounted on a driving shaft (245) and is independently engageable with the driving shaft (245) by means of coupling (345).

9. The device according to claim 7, **characterized in that** at least one linear motor (143) or hydraulic actuator or pneumatic actuator causing sliding movement of the rotatable cylinders (141, 146) along their rotation axes is independently engaged with the main shaft (441) of the main cylinder (141) and with the auxiliary shaft (446) of the auxiliary cylinder (146) having the cylindrical surfaces of different textures.

## Patentansprüche

1. Ein Verfahren zur Aussenbeschitung von Profilen aus PVC, bei welchem in einem Extrusionsprozess, der in einem Extruder durchgeführt wird, hinter einem Hauptmundstück und vor Kalibratoren wenigstens eine PVC-Folie von bestimmter Farbgebung hinzugefügt wird, die von wenigstens einer Rolle abgewickelt wird und die während des Extrusionsprozesses durch das Drücken mittels mindestens eines drehbaren Zylinders mit dem Profil verklebt wird, welches sich von dem Mundstück ab entlang der Profillängsachse bewegt, **dadurch gekennzeichnet, dass** wenigstens eine Folie (32, 36) mittels eines Satzes von drehbaren Zylindern (41, 46) aufgepresst wird, wobei der Satz mindestens einen drehbaren, auf einer Hauptwelle (441) angeordneten Hauptzylinder (41) und einen drehbaren, auf einer Hilfswelle (446) angeordneten Hilfszylinder (46) beinhaltet, die nacheinander hinter dem Hauptmundstück (23) und vor den Kalibratoren (50) angeordnet sind und deren zylindrische Außenflächen (241, 246) unterschiedliche, Eintiefungen und Erhebungen aufweisende Textur haben, und die in Teilen der mit der Folie (32) in Kontakt stehenden zylindrischen Außenflächen (241, 246) von bestimmter Farbgebung quer zur Längsachse (11) des Profils (10) nach wenigstens einer vollen Umdrehung des drehbaren Hauptzylinders (41) und/oder des drehbaren Hilfszylinders (46) relativ zueinander bewegt werden, wobei während der Bewegung des Profils (10) entlang seiner Längsachse (11) infolge des Aufpressens der Folie (32) auf das Profil mittels eines mindestens einen Hauptzylinder (41) und einen Hilfszylinder (46) beinhaltenden Zylinder-Satzes eine nicht repetitive Sequenz von Eintiefungen und Erhebungen an der Oberfläche des Profils (10) gebildet wird.

2. Das Verfahren nach Anspruch 1, **dadurch gekennzeichnet, dass** die Teile der zylindrischen, mit der Folie (32) in Kontakt stehenden Außenflächen (241, 246) quer zur Profilachse durch das Verschieben des Hauptzylinders (41) oder des Hilfszylinders (46) entlang deren Drehachsen relativ zueinander bewegt werden.

3. Das Verfahren nach Anspruch 1, **dadurch gekennzeichnet, dass** die Teile der mit der Folie (32) in Kontakt stehenden zylindrischen Außenflächen (241, 246) quer zur Längsachse (11) des Profils (10) durch das Verschieben des Hauptzylinders (41) und des Hilfszylinders (46) entlang ihrer Drehachsen in entgegengesetzten Richtungen relativ zueinander bewegt werden.

4. Das Verfahren nach einem der vorherigen Ansprüche, **dadurch gekennzeichnet, dass** der Hauptzylinder (41) und/oder der Hilfszylinder (46) sich entlang seiner Drehachse mittels Schneckengetriebe (44, 49) bewegt, das auf einer Antriebswelle (245) Schnecken aufweist, welche mit der Antriebswelle (245) mittels Kupplungen (345) koppelbar sind und dessen Schneckenräder auf der Hauptwelle (441) des Hauptzylinders (41) und auf der Hilfswelle (446) des Hilfszylinders (46) angeordnet sind.

5. Das Verfahren nach einem der Ansprüche 1 bis 3, **dadurch gekennzeichnet, dass** die Hauptwelle (441) des Hauptzylinders (141) und/oder die Hilfswelle (446) des Hilfszylinders (146) sich entlang ihrer Drehachse mittels Linearmotoren (143) oder mittels hydraulischen oder pneumatischen Kolben-Zylinder-Anordnungen bewegt, welche unabhängig mit der Hauptwelle (441) und mit der Hilfswelle (446) gekoppelt sind, die wiederum verschiebbar in Gleitlagern gelagert sind.

6. Das Verfahren nach einem der vorherigen Ansprüche, **dadurch gekennzeichnet, dass** die Teile der mit der Folie in Kontakt stehenden zylindrischen Außenflächen (241, 246) durch Variierung der Durchmesser des Hauptzylinders (41) und des Hilfszylinders (46) relativ zueinander bewegt werden.

7. Eine Vorrichtung zur Aussenbeschitung von Profilen aus PVC, umfassend einen Extruder, welcher einen Werkstoff-Zuführer aufweist und mit einem Hauptmundstück ausgestattet ist, hinter welchem die Kalibratoren angeordnet sind, einen Zuführer wenigstens einer die Außenverkleidung des PVC-Profils bildenden und von wenigstens einer Rolle abwickelbaren PVC-Folie, wobei der Zuführer zur Zuführung der PVC-Folie hinter dem Hauptmundstück und vor den Kalibratoren bestimmt ist, sowie wenigstens eine Aufpressvorrichtung, die mindestens eine Hauptwelle mit einem drehbaren Zylinder aufweist, der die PVC-Folie auf das sich von dem Mundstück ab entlang der Profilängsachse bewegende Profil aufpresst, **dadurch gekennzeichnet, dass** der drehbare, die PVC-Folie (32, 36) aufpressende Hauptzylinder (41) mit wenigstens einem drehbaren Hilfszylinder (46) zusammengesetzt ist, wobei der auf der Hilfswelle (446) angeordnete Hilfszylinder (46) und der auf der Hauptwelle (441) angeordnete Hauptzylinder (41) nacheinander hinter dem Hauptmundstück (23) und vor den Kalibratoren (50) in Richtung der Längsachse (11) des Profils (10) angeordnet sind und einen Zylinder-Satz bilden, der die PVC-Folie (32) auf das Profil (10) aufpresst, wobei ihre zylindrischen, sich auf drehbaren Zylindern (41, 46) befindenden Außenflächen (241, 246) unterschiedliche, Eintiefungen und Erhebungen aufweisende Tektur haben, wobei die zylindrischen Außenflächen (241, 246) quer zur Längsachse (11) des Profils (10) relativ zueinander bewegbar sind und nach wenigstens einer vollen Umdrehung des drehbaren Hauptzylinders (41) und/oder des drehbaren Hilfszylinders (46) während der Bewegung des Profils (10) entlang seiner Längsachse (11) infolge des Aufpressens der Folie (32) auf das Profil mittels des den Hauptzylinder (41) und den Hilfszylinder (46) beinhaltenden Zylinder-Satzes, eine nicht repetitive Sequenz von Eintiefungen und Erhebungen an der Oberfläche des Profils (10) bilden.

8. Die Vorrichtung nach Anspruch 7, **dadurch gekennzeichnet, dass** auf der Hauptwelle (441) des Hauptzylinders (41) und auf der Hilfswelle (446) des Hilfszylinders (46), welche zylindrische Außenflächen (241, 246) unterschiedlicher Textur aufweisen, Schneckenräder gelagert sind, welche sich mit den auf der Antriebswelle (245) gelagerten, separaten Schnecken verzahnen, welche wiederum mit der Antriebswelle (245) mittels Kupplungen (341, 346) unabhängig koppelbar sind.

9. Die Vorrichtung nach Anspruch 7, **dadurch gekennzeichnet, dass** mit der Hauptwelle (441) des Hauptzylinders (141) und mit der Hilfswelle (446) des Hilfszylinders (146), welche zylindrische Außenflächen (241, 246) unterschiedlicher Textur aufweisen, wenigstens ein Linearmotor (143) oder eine hydraulische oder pneumatische Kolben-Zylinder-Anordnung, welche eine Gleitbewegung von drehbaren Zylindern (141, 146) entlang ihrer Drehachsen verursacht, unabhängig gekoppelt ist.

## Revendications

1. Une méthode pour revêtir extérieurement des profilés en PVC, dans lequel dans le processus d'extrusion mené dans l'extrudeur, derrière la bouche principale d'extrusion et devant les calibrateurs, on ajoute au moins une feuille PVC d'une couleur définie et déroulé à partir d'au moins un rouleau et qui durant le processus d'extrusion par le serrage à l'aide d'au moins un cylindre rotatif se colle au profilé se déplaçant de la bouche d'extrusion le long de l'axe longitudinale du profilé, **caractérisée en ce qu'**au moins une feuille (32, 36) est serré à l'aide de l'ensemble de cylindres rotatifs (41, 46) contenant au moins un cylindre rotatif principal (41) se trouvant sur l'arbre principal (441) et un cylindre rotatif auxiliaire (46) placé sur l'arbre auxiliaire (446), placés l'un derrière l'autre après la bouche principale d'extrusion (23) et avant les calibrateurs (50) dont les surfaces cylindriques extérieures (241, 246) possèdent une texture variée **se caractérisant par** des enfoncements et des sommets et qui dans les fragments externes des surfaces cylindriques (241, 246) coïncident avec la feuille (32) à la couleur définie se déplace relativement à soi en travers de l'axe longitudinale (11) du profilé (10) au moins après avoir effectué un tour complet du cylindre rotatif principal (41) et/ou du cylindre auxiliaire rotatif (46) créant une séquence ne se répétant pas d'enfoncements et de sommets sur la surface du profilé (10) pendant le déplacement du profilé (10) le long de son axe longitudinale (11) suite à l'appui de la feuille (32) au profilé à l'aide de l'ensemble de cylindres contenant au moins un cylindre principal (41) et un cylindre auxiliaire (46).

2. La méthode selon la revendication 1, **caractérisée en ce que** les fragments extérieurs des surfaces cylindriques (241, 246) touchant la feuille (32) se déplacent par rapport à soi-même en travers de l'axe du profilé par le déplacement du cylindre principal (41) ou du cylindre auxiliaire (46) le long de leur axe de rotation.

3. La méthode selon la revendication 1, **caractérisée en ce que** les fragments extérieurs des surfaces cylindriques (241, 246) touchant la feuille (32) se déplacent par rapport à soi-même en travers de l'axe longitudinale (11) du profilé (10) par le déplacement dans les directions opposées du cylindre principal (41) et du cylindre auxiliaire (46) le long de leur axe de rotation.

4. La méthode selon une des revendications antérieures, **caractérisée en ce que** le cylindre principal (41) et/ou auxiliaire (46) se déplace le long de son axe de rotation à l'aide de l'engrenage à vis sans fin (44, 49) qui sur l'arbre de commande (245) possède des vis sans fin accouplant avec l'arbre de commande (245) à l'aide des accouplement (345) et dont les roues à vis sans fin se trouvent sur l'arbre principal (441) du cylindre principal (41) et sur l'arbre auxiliaire (446) du cylindre auxiliaire (46).

5. La méthode selon une des revendications de 1 à 3, **caractérisée en ce que** l'arbre principal (441) du cylindre principal (141) et/ou auxiliaire (446) du cylindre auxiliaire (146) se déplace le long de sa propre axe à l'aide des vis sans fin (143) ou des servomoteurs hydrauliques ou pneumatiques accouplés indépendamment à l'arbre principal (441) et à l'arbre auxiliaire (446) monté dans les paliers à glissement.

6. La méthode selon une des revendications antérieures, **caractérisée en ce que** les extérieurs des surfaces cylindriques (241, 246) touchant la feuille se déplacent par rapport à soi-même par la différenciation des diamètres du cylindre principal (41) et du cylindre auxiliaire (46).

7. Un dispositif pour revêtir extérieurement des profilés en PVC contenant un extrudeur avec le chargeur du matériau et équipé d'une bouche principale d'extrusion, derrière laquelle se trouvent les calibrateurs, le chargeur d'au moins une feuille PVC formant le revêtement extérieur du profilé PVC et déroulé à partir d'au moins un rouleau et servant à charger la feuille PVC derrière la bouche principale d'extrusion et devant les calibrateurs et au moins un appareil serrant possédant au moins un arbre principal avec le cylindre rotatif serrant la feuille PVC au profilé se déplaçant de la bouche d'extrusion le long de l'axe longitudinale du profilé, **caractérisé en ce que** le cylindre rotatif principal (41) serrant la feuille PVC (32, 36) est assemblé avec au moins un cylindre rotatif auxiliaire (46), quoique le cylindre auxiliaire (46) placé sur l'arbre auxiliaire (446) et le cylindre principal (41) placé sur l'arbre principal (441) sont placés l'un après l'autre derrière la bouche principale d'extrusion (23) et devant les calibrateurs (50) dans la direction de l'axe longitudinale (11) du profilé (10) et forment un ensemble serrant le feuille PVC (32) au profilé (10) tandis que leurs surfaces extérieures cylindriques (241, 246) se trouvant sur les cylindres rotatifs (41, 46) possèdent une texture variée **se caractérisant par** des enfoncements et des sommets dont les surfaces cylindriques extérieures (241, 246) se déplacent par rapport à soi-même en travers de l'axe longitudinale (11) du profilé et après la réalisation d'au moins un tour complet du cylindre principal rotatif (41) et/ou du cylindre auxiliaire rotatif (46) créant une séquence ne se répétant pas d'enfoncements et de sommets sur la surface du profilé (10) pendant le déplacement du profilé (10) le long de son axe longitudinale (11) suite à l'appui de la feuille (32) au profilé à l'aide de l'ensemble de cylindres contenant au moins un cylindre principal (41) et un cylindre auxiliaire (46).

8. Le dispositif selon la revendication 7, **caractérisé en ce que** sur l'arbre principal (441) du cylindre principal (41) et sur l'arbre auxiliaire (446) du cylindre auxiliaire (46) possédant les surfaces cylindriques (241, 246) à texture variée sont montées les roues à vis sans fin qui s'engrainent avec les vis sans fin séparées placées sur l'arbre de commande (245) qui sont couplés indépendamment avec l'arbre de commande (245) à l'aide des accouplements (341, 346).

9. Le dispositif selon la revendication 7, **caractérisé en ce qu'**avec l'arbre principal (441) du cylindre principal (41) et avec l'arbre auxiliaire (446) du cylindre auxiliaire (46) possédant les surfaces cylindriques (241, 246) à texture variée est accouplé indépendamment au moins un moteur linéaire (143) ou un servomoteur hydraulique ou un servomoteur pneumatique causant le déplacement des cylindres rotatifs (141, 146) le long de leur axe de rotation.
